# EUROPEAN PATENT APPLICATION

(11) **EP 4 276 436 A1**
(43) Date of publication of application: **15.11.2023**
(21) Application number: 22172520.3
(22) Date of filing: 10.05.2022
(51) Int. Cl.: G01M 3/00, F16L 55/128

(54) **METHOD AND KIT OF PARTS FOR DETERMINING A POSITION OF A LEAK IN A CONDUIT**

(71) Applicant: Preventum Innovations AB, 262 61 Ängelholm (SE)
(72) Inventor: Wennström, Niklas, 262 61 Ängelholm (SE)
(74) Representative: AWA Sweden AB

(57) **Abstract**

According to an aspect of the present inventive concept there is provided a method for detecting a position of a leak in a conduit being installed inside a surface.

The method comprises inserting a probe into an end of the conduit. The probe has a sealing element configured to seal against an inner surface of the conduit, and proximity of the probe is wirelessly detectable.

The method further comprises applying a pressure difference in the conduit across the sealing element.

The method further comprises advancing the probe along the conduit such that the sealing element passes the leak.

The method further comprises detecting a change in pressure in the conduit when the sealing element passes the position of the leak.

The method further comprises determining the position of the probe by scanning a probe detector external to, and across the surface. The probe detector is configured to wirelessly detect proximity of the probe.

## Description

### Technical field

The present inventive concept generally relates to detection of leaks in conduits, and more specifically to a method and a kit of parts for determining a position of a leak in a conduit installed inside a surface, such as inside a floor, a wall, or a ceiling.

### Background

Leaks in conduits installed inside a surface, such as inside a floor, a wall or a ceiling, present a challenge in that they may be difficult to detect, and even more difficult to locate. Consequently, when it has been determined that a leak is present in a conduit, it may be necessary to tear up the entire surface inside which the conduit has been installed and along the full length of the conduit in order to locate the leak and to thereafter repair the leak. Hence, the cost of repairing a leak may be very high, since the surface needs to be restored after the repair.

In the present context, it is understood that the term "conduit" may comprise both rigid pipes, which may be of metal or polymer material, and hoses, which would typically be formed of polymer material.

The problem is growing as more and more buildings comprise heating and/or cooling installed in the floor and/or in the ceiling. Such heating and/or cooling systems generally comprise a continuous, non-jointed section of conduit, which may extend back and forth several times inside the surface so as to effectively cover an entire floor or ceiling of a room.

The problem may also arise in air conditioning systems, wherein conduits for a working fluid may be installed inside a wall, a floor or a ceiling. Moreover, the problem may also arise in water supply conduits, as well as in supply conduits for gas used for heating and/or cooking.

Hence, there is a need in the art for a method to accurately locate a leak in a conduit so as to be able to repair it locally, thereby eliminating the need for having to tear up the surface along the entire conduit.

### Summary

An objective of the present inventive concept is to mitigate, alleviate or eliminate one or more of the above-identified deficiencies in the art and disadvantages singly or in any combination. These and other objectives are at least partly met by the invention as defined in the independent claims. Preferred embodiments are set out in the dependent claims.

According to a first aspect of the present inventive concept there is provided a method for detecting a position of a leak in a conduit being installed inside a surface, the method comprising:
inserting a probe into an end of the conduit, the probe having a sealing element configured to seal against an inner surface of the conduit, and wherein proximity of the probe is wirelessly detectable;
applying a pressure difference in the conduit across the sealing element;
advancing the probe along the conduit such that the sealing element passes the leak;
detecting a change in pressure in the conduit when the sealing element passes the position of the leak;
determining the position of the probe by scanning a probe detector external to, and across the surface, the probe detector being configured to wirelessly detect proximity of the probe.

The probe has a sealing element configured to seal against an inner surface of the conduit. By way of example, the sealing element may be configured to slidingly seal against an inner surface of the conduit, so as to facilitate advancing the probe. Advancing the probe along the conduit may be achieved in a variety of different manners. By way of example, the probe may be connected to a probe connector that may extend from the probe, along the conduit to the end into which the probe is inserted. By the use of the probe connector, the probe may be guided inside the conduit, e.g. by pulling or pushing the probe connector from outside the conduit. The probe connector may be in the form of a wire, which in some embodiments are only able to support tensile forces along its length, but which would collapse if subjected to a compressive force. Alternatively, the probe connector may be in the form of a semi rigid wire, which may support also some compressive forces along its length. As yet another alternative, the probe connector may be in the form of a flexible rod that may resiliently bend with the radius of curvature of the conduit. As yet another alternative, the probe connector may be in the form of a tube or a hose of a polymer material.

By way of further example, the advancing of the probe along the conduit may alternatively or additionally be achieved by the pressure difference applied across the sealing element. The pressure difference may be large enough to overcome the frictional forces between the sealing element and the inner surface of the conduit such that the probe and the sealing element is pushed from the high-pressure side towards the low-pressure side of the conduit.

Even if the pressure difference is not large enough to overcome the frictional forces between the sealing element and the inner surface of the conduit, the sealing element may experience a force in a direction along the conduit, due to the pressure difference applied across the sealing element.

An advantage with the present inventive concept is that an additional force required to advance the probe along the conduit may be small compared to when no pressure difference is applied across the sealing element. By the present arrangement, a method and a probe for detection of a position of a leak may be provided, wherein the advancement of the probe along the conduit may be facilitated.

Another advantage is that the pressure difference applied across the sealing element may assist in moving the prove passed bends in the conduit. Conventional leak detection probes may have difficulties in passing bends in conduits, as it may be difficult to provide the required force in the required direction inside the conduit. This is especially problematic in long conduits having several bends. However, by the present arrangement the problem is overcome by the pressure difference across the sealing element that may assist in pulling and/or pushing the probe in the right direction along the conduit.

Yet another advantage is that indication of the pressure change, and thus indication of whether the probe has passed the leak, may be provided continuously during the advancement of the probe along the conduit. By the present arrangement, a method may be provided wherein the probe may be easily and quickly advanced along the conduit and wherein an indication of when the probe passes the leak may be provided substantially instantly. Hence, a method for quickly and accurately determining the position of the leak may be provided.

According to an embodiment, the applying a pressure difference comprises:
connecting a vacuum pump to the conduit;
removing, by the vacuum pump, air inside the conduit on one side of the sealing element.

Given as a non-limiting example, the vacuum pump may comprise a pressure gauge which may indicate a pressure in the conduit provided by the vacuum pump. Alternatively, an external pressure gauge may be connected to the connection between the vacuum pump and the conduit to provide an indication of the pressure in the conduit. The pressure gauge may be used for determining the change in pressure in the conduit when the sealing element passes the position of the leak.

An advantage with the embodiment is that easier control of the advancement of the probe along the conduit may be provided. For example, if a very high overpressure is alternatively provided, the probe may advance faster along the conduit than desired, and the control by a user of the movement of the probe may be less precise.

According to an embodiment, the probe is inserted into a first end of the conduit and the vacuum pump is connected to a second end of the conduit.

An advantage with this embodiment is that a negative pressure may be provided at the second end of the conduit towards which the probe is to be advanced. The advancement of the probe towards the second end may therefore be facilitated since the pressure in the conduit at the first end is higher than at the second end and may therefore provide a force on the sealing element and the probe in the direction towards the second end. Hence, the pressure difference across the sealing element may provide a force in the same direction in which the probe is to be advanced, which may assist the advancement.

According to an embodiment, the vacuum pump is removing air inside the conduit while the probe is advanced along the conduit.

According to an embodiment, the sealing element has a constant outer diameter adapted to fit to an inner diameter of the conduit.

An advantage with the present embodiment is that a sealing element that is adapted to fit to an inner diameter of the conduit may easily be selected such that is may seal against an inner surface of the conduit. By way of example, a set of sealing elements may be provided wherein the outer diameters of the sealing elements are different such that they are adapted to fit conduits with different inner diameters. A user may measure the inner diameter of the conduit in question, and then select the sealing element from the set of sealing elements that best fits said inner diameter, and connect the sealing element to the probe. Further adjustment of the outer diameter of the sealing element may not be required.

According to an embodiment, the sealing element has a variable outer diameter.

An advantage with the embodiment is that the outer diameter of the sealing element may be changed when the sealing element is inside the conduit. By the present arrangement the outer diameter of the sealing element may be adapted to variations of the inner diameter along the conduit.

Another advantage is that as the outer diameter of the sealing element is varied, the frictional forced between the inner surface of the conduit and the sealing element may vary. By the present arrangement, sliding of the sealing element may be adapted to the level of sliding required by different parts of the conduits, as for example to provide easier sliding of the sealing element in order for the sealing element to pass bends in the conduit.

According to an embodiment, the method further comprises applying a lubricant to the sealing element.

An advantage with applying a lubricant to the sealing element is that the sliding of the sealing element may be facilitated, thereby facilitating the advancement of the sealing element and the probe along the conduit.

According to an embodiment, the advancing the probe along the conduit comprises pulling the probe by a negative pressure created by the vacuum pump between the second end and the sealing element.

According to an embodiment, the change in pressure in the conduit is a decrease in pressure in the conduit when the sealing element passes the position of the leak.

According to an embodiment, the conduit is made of a polymer material.

According to an embodiment, the conduit is a continuous conduit.

An advantage with the embodiment is that the risk of the sealing element getting stuck in the conduit is decreased and may preferably be avoided.

According to an embodiment, the conduit is installed 0.5 meter or less below the surface.

By way of example, the conduit may, e.g., be installed about 0.5-5 cm below the surface, about 5-10 cm below the surface, about 10-15 cm below the surface, about 15-20 cm below the surface, about 20-25 cm below the surface, about 25-30 cm below the surface, about 30-35 cm below the surface, about 35-40 cm below the surface, about 40-45 cm below the surface or about 45-50 cm below the surface. By way of further example, the conduit may alternatively be installed more than 0.5 m below the surface, such as about 1 m below the surface, about 2 m below the surface, about 3 m below the surface, or about 6 m below the surface.

An advantage with the embodiment is that the detection of the position of the probe by the probe detector may be provided at a low intensity of the emitted signal, and thus a low electric power may be required. By way of example, a low power power supply may be used in order to generate the emitted signal. Alternatively, power for generating the emitted signal may be provided by a battery carried onboard the probe or the probe detector.

According to an embodiment, the method further comprises:
determining an inner diameter of the conduit;
selecting a sealing element having an outer diameter matching the inner diameter of the conduit, thereby allowing the selected sealing element to seal against an inner surface of the conduit; and
attaching the selected sealing element to the probe.

According to an embodiment, the method further comprises advancing the probe back and forth at least twice, while monitoring the pressure difference, such that the position of the leak is more accurately determined.

An advantage with the embodiment is that the position of the leak may be determined more accurately and thereby the amount of tearing up of the surface may be minimized. This may consequently minimize the amount of repair work required to restore the surface, after the leak has been repaired.

According to a second aspect of the present inventive concept there is provided a kit of parts for detecting a position of a leak in a conduit being installed inside a surface, the kit of parts comprising:
a probe insertable into the conduit,
a sealing element, which is attachable to the probe and configured to seal against an inner surface of the conduit,
   wherein proximity of the probe is wirelessly detectable, and
a probe detector configured to wirelessly detect proximity of the probe.

According to an embodiment, the kit of parts further comprises:
a vacuum pump connectable to the conduit and configured to remove air inside the conduit.

According to an embodiment, the kit of parts may alternatively comprise a compressor connectable to the conduit and configured to increase a pressure inside the conduit. In the case of a compressor, a sealable probe port may be provided, through which the compressor may be connected to the end of the conduit through which the probe is inserted.

Given as a non-limiting example, the compressor may comprise a pressure gauge which may indicate a pressure in the conduit provided by the compressor. Alternatively, an external pressure gauge may be connected to the connection between the compressor and the conduit to provide an indication of the pressure in the conduit. The pressure gauge may be used for determining the change in pressure in the conduit when the sealing element passes the position of the leak.

According to an embodiment, the sealing element has a constant outer diameter adapted to fit to an inner diameter of the conduit.

According to an embodiment, the sealing element has a variable outer diameter.

According to an embodiment, the sealing element is inflatable.

According to an embodiment, the probe is attachable to a wire.

According to an embodiment, the probe is attached to a flexible rod.

According to an embodiment, the sealing element is releasably connectable to the probe.

According to an embodiment, the sealing element is fixedly attached to the probe.

According to an embodiment, the probe is an active probe, having a transmitter configured to transmit electromagnetic radiation.

According to an embodiment, the probe is a passive prove, having a reflector configured to reflect electromagnetic radiation.

By the term "electromagnetic radiation" is here meant any type of radiation involving an electric field and/or magnetic field. By way of example, an alternating current provided through an electrically conducting wire may provide an alternating electric field in the vicinity of the wire. Such an electric field may be wirelessly detectable.

According to an embodiment, the probe is an active probe, having a transmitter configured to transmit an acoustic wave.

According to an embodiment, the probe is a passive prove, having a reflector configured to reflect an acoustic wave.

By way of example, an acoustic wave may be in the form of a pulse, a series of pulses, a continuous wave of constant amplitude, or a periodically varying wave.

Effects and features of the second aspect are largely analogous to those described above in connection with the first aspect. Embodiments mentioned in relation to the first aspect are largely compatible with the second aspect. It is further noted that the inventive concepts relate to all possible combinations of features unless explicitly stated otherwise.

Other objectives, features and advantages of the present inventive concept will appear from the following detailed disclosure, from the attached claims as well as from the drawings.

### Brief description of the drawings

The above, as well as additional objects, features and advantages of the present inventive concept, will be better understood through the following illustrative and non-limiting detailed description, with reference to the appended drawings. In the drawings like reference numerals will be used for like elements unless stated otherwise.
Fig. 1 schematically illustrates a conduit installed inside a surface.
Fig. 2a-2c schematically illustrated a detection system provided as a kit of parts for performing a method of detecting a leak in the conduit.

### Detailed description

In cooperation with attached drawings, the technical contents and detailed description of the present inventive concept are described thereinafter according to a preferable embodiment, being not used to limit the claimed scope. This inventive concept may be embodied in many different forms and should not be construed as limited to the embodiments set forth herein; rather, these embodiments are provided for thoroughness and completeness, and fully convey the scope of the inventive concept to the skilled person.

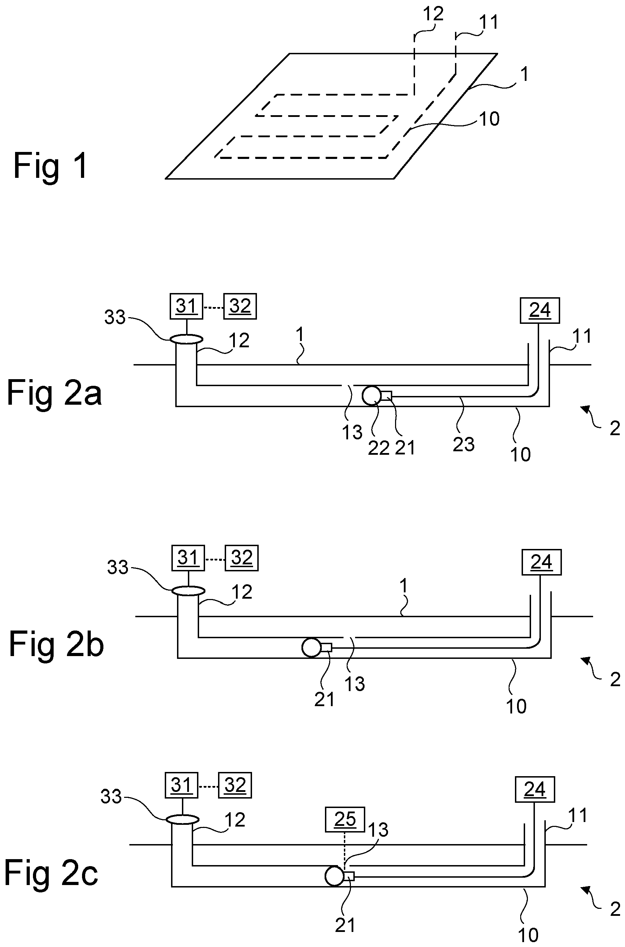

Fig. 1 schematically illustrates a conduit 10 installed inside a surface 1. In the present example, the surface 1 is a surface of an indoor floor. However, it should be understood that the surface 1 may alternatively be another surface of an indoor construction element of a building, such as a wall or a ceiling. Alternatively, the surface 1 may be an outdoor construction element of a building, such as a base, a wall, or a roof. As yet further alternatives, the surface 1 may be a ground surface, such as a road, a walkway, a pavement, or the like.

By way of example, the conduit 10 may be a supply conduit for water or gas. Alternatively, the conduit 10 may be a heat exchanging circuit for providing heat to the surface 1 such as underfloor heating, or a cooling circuit for removing heat from the surface 1 such as underfloor or ceiling cooling. By way of further example, the conduit 10 may alternatively be a circulation conduit for working fluid of a heat pump or an air conditioning device.

The conduit 10 is installed inside the surface 1 such that if the surface 1 is a surface of a wall the conduit 10 is installed inside the wall behind the wall surface, if the surface 1 is a surface of a floor the conduit 10 is installed below the floor surface, or if the surface 1 is a surface of a ceiling the conduit 10 is installed in the ceiling above the ceiling surface. In other words, at least part of the conduit may be hidden inside the construction element.

Henceforth, a conduit installed in a floor underneath the floor surface will be discussed. However, it should be understood that the technical reasoning related to the conduit 10 and to the method and apparatus for leak detection is analogously applicable in all other variants of conduit installations mentioned herein.

The conduit 10 may have a first end 11 and a second end 12. By way of example, the first and second ends 11, 12 may be configured for supplying a flow of fluid, such as gas or liquid, such as water, to and from the conduit, respectively. However, it is conceivable that the conduit may have also other ends and/or that the first and second ends 11, 12 may serve different purposes such as providing access to a specific section of the conduit for enabling draining the conduit. The first and second ends 11, 12 may be accessible externally to the surface. Given as a non-limiting example, the first and second ends 11, 12 may extend through the surface 1 underneath which the conduit is installed and hidden, such that the first and second ends 11, 12 are not hidden but rather accessible externally to the surface 1. For example, the conduit 10 illustrated in Fig. 1 being installed and hidden underneath a floor surface, through which the first and second ends 11, 12 may extend such that they may be accessed by e.g. a service technician and/or for connection to further portions of the relevant installation.

The conduit 10 may extend straight between first and second ends 11, 12 thereof. Alternatively, it may be arranged in a pattern, such as, but not limited to, back-and-forth or a meandering pattern. By way of example, underfloor heating is typically intended to supply heat to a large portion of a floor, such as the entire surface of the floor. A conduit for underfloor heating may thus have a pattern extending across a large portion of the floor. Such a pattern may involve several turns of the conduit, as illustrated in Fig. 1.

The conduit 10 may be installed at any depth that is reachable by the selected detection system 2, which will be described in relation to Figs 2a-2c. Particular depths may be 1-5 mm, 5-10 mm, 10-50 mm, 50-100 mm, 100-200 mm, 200-300 mm or 300-500 mm from the surface 1.

Given as a non-limiting example, the conduit 10 may be a relatively rigid metal conduit, such as a metal pipe. Alternatively, the conduit 10 may be a relatively rigid polymer conduit, such as a polymer pipe. As yet another alternative, the conduit 10 may be a flexible conduit, such as a hose, which may be formed of a polymer material.

Referring to Figs 2a-2c, a detection system 2 provided as a kit of parts for performing the method of detecting a leak 13 in the conduit 10 will now be described.

A detection system 2 is provided as a kit of parts for detecting the position of a leak in a conduit 10. The detection system 2 comprises a probe 21, a sealing element 22, a probe connector 23 and optionally a probe driver 24. The detection system 2 further comprises a probe detector 25, configured to wirelessly detect proximity of the probe 21.

The probe 21 is a probe that may be configured to emit, or reflect, in a manner known per se, electromagnetic radiation, such as magnetic radiation and/or an electric field. Hence, in some embodiments, the probe 21 may be an active probe, having an emitter for electromagnetic radiation. However, in alternative embodiments, the probe 21 may be a passive probe, having a reflector for reflecting electromagnetic radiation, such as a passive RFID type circuit.

Although the probe 21 is described herein as a probe being configured to emit, or reflect, electromagnetic radiation, it should be understood that in alternative variations, the probe 21 may be configured to emit, or reflect, other types of wirelessly detectable signals, as for example acoustic waves.

The sealing element 22 is an element, which in some embodiments may have a fixed outer circumference. The outer circumference is specifically adapted for the inner cross-sectional circumference of the conduit 10, such that the sealing element 22, once the probe 21 is inserted into the conduit 10, will seal against the inner surface of the conduit 10. By way of example, the sealing element may be configured to slidingly seal against an inner surface of the conduit, so as to facilitate advancing the probe. As illustrated in Figs 2a-2c, the sealing element 22 may be in the shape of a sphere. The sealing element 22 may have an outer diameter adapted to fit to an inner diameter of the conduit 10. Thus, the outer diameter of the sealing element 22 may match the inner diameter of the conduit 10. However, it should be understood that the shape of the sealing element 22 is not limited to a sphere, but may have any other shape suitable for sealing against the inner surface of the conduit 10, such as the shape of a cylinder or a disk. Additionally, circumferentially extending ridges or flexible lips may be provided.

In some embodiments, the sealing element 22 may be integrated with the probe 21. In case of the sealing element 22 being integrated with the probe 21, it is conceivable that a set of probes 21 with sealing elements 22 having different diameters may be provided. The present arrangement allows for selection of a probe 21 having a sealing element 22 adapted to fit various inner diameters of conduits 10.

In other embodiments, the sealing element may be releasably attachable to the probe body, e.g. by a threaded connection, a bayonet connection or a snap connection. In case of the sealing element 22 being releasably attachable to the probe 21, it is conceivable that a set of sealing elements 22 having different diameters may be provided. The present arrangement allows for selection of a sealing element 22 adapted to fit various inner diameters of conduits 10, to be attached to the probe 21.

In some alternative embodiments, the sealing element 22 may have a variable outer circumference, e.g. by being inflatable. By the present arrangement, the outer diameter of the sealing element 22 may be varied such that it may fit various inner diameters of conduits 10.

The probe connector 23 may be connected to the probe 21 in order to guide the probe 21 inside the conduit, and to retract the probe 21 from the conduit 10, once the position of the leak 13 has been found. The probe connector 23 may be formed as a wire, which in some embodiments are only able to support tensile forces along its length, but which would collapse if subjected to a compressive force. In other embodiments, the probe connector 23 may be formed as a semi rigid wire, which may support also some compressive forces along its length. In yet other embodiments, the probe connector 23 may be formed as a flexible rod. By the term "flexible" is here meant that the rod may resiliently bend with the radius of curvature of the conduit 10.

The probe connector 23 connected to the probe 21 may provide additional functionality to the probe 21.

By way of example, in embodiments wherein the probe 21 is an active probe, electric power may be supplied through the probe connector 23. Thus, a power lead may form part of the probe connector 23 such that electric power is provided to the probe 21, thereby allowing the probe 21 to emit electromagnetic radiation or acoustic waves. Further, in embodiments wherein the probe 21 is an active probe, a probe driver 24 may be provided. The probe driver 24 may comprise a power source and a signal generator for generating signals to the probe 21, being transmitted through the probe connector 23 to the probe 21.

By way of further example, in embodiments wherein the probe 21 has a sealing element 22 with a variable circumference, fluid, such as gas, may be supplied, and optionally extracted, through the probe connector 23 to the sealing element 22, in order to inflate the sealing element 22.

In order to determine the position of the probe 21 once inserted into the conduit 10, a probe detector 25 is provided. The probe detector 25 may comprise a receiver for receiving electromagnetic radiation from the probe 21 and for measuring a strength of the electromagnetic radiation. In embodiments wherein the probe 21 is an active probe, electromagnetic radiation emitted by the probe 21 is detectable by the probe detector 25. In embodiments wherein the probe 21 is a passive probe, the probe detector 25 may be further configured to emit electromagnetic radiation that may be reflected by the probe 21 back to the probe detector 25.

The probe detector 25 may further comprise signal indicator for indicating the strength of the electromagnetic radiation to a user. The indicator may be an optical indicator, e.g. providing one or more lamps, which are selectively driven in response to the strength, or a display showing a number corresponding to the value corresponding to the detected strength of radiation. Alternatively or as a supplement, the indicator may comprise an acoustic indicator, providing an acoustic indication of the strength. By the present arrangement, proximity of the probe 21 to the probe detector 25 may be wirelessly detected.

A vacuum pump 31 may be provided as being part of the kit of parts, or alternatively as a stand-alone unit. The vacuum pump may comprise a pressure gauge 32, which may indicate a pressure in the conduit provided by the vacuum pump 31. Alternatively or additionally, the vacuum pump 31 may comprise a current indicator indicating a drive current drawn by the vacuum pump 31. The pressure gauge 32 as well as the current indicator are configured to provide an indication of a pressure, and thus the vacuum level in the conduit 10, provided by the vacuum pump 31.

The vacuum pump 31 may be connected to the conduit 10 by a vacuum connector 33.

Referring to Fig. 2a, the method of detecting a leak 13 in the conduit 10 will now be described. It serves to mention that prior to using the method for leak detection, if the conduit is e.g. a conduit for water, the conduit should be emptied and preferably all water should be removed from the conduit as for example by the use of pressurized air.

As illustrated in Fig. 2a, a probe 21 is inserted from the first end 11 of the conduit 10 and the vacuum pump 31 is connected to the second end 12 of the conduit 10, by means of the vacuum connector 33. The probe 21 is provided with a sealing element 22 which seals against the inside of the conduit 10. Hence, prior to the insertion of the probe, the inner diameter of the conduit 10 may need to be determined and an appropriate sealing element 22 selected. While the probe 21 is inserted and as the vacuum pump 31 is activated, air is removed by the vacuum pump 31 from inside a section of the conduit 10, between the sealing element 22 and the second end 12. By the present arrangement, a pressure difference is applied in the conduit 10 across the sealing element 22, forming an evacuated section of the conduit 10 between the sealing element 22 and the second end 12 of the conduit 10.

Since the sealing element 22 seals against the inner surface of the conduit 10, substantially no air will escape past the sealing element 22 and into the evacuated section of the conduit 10. However, while the probe 21 is on the opposite side of the leak 13 with respect to the connection of the vacuum pump 31 at the second end 12, air will be drawn through the leak 13 and into the evacuated section of the conduit 10 as a result of the negative pressure in the conduit 10. The pressure in the evacuated section of the conduit 10 as a result of the balance between the work of the vacuum pump 31 and the air drawn through the leak 13 may be indicated by the pressure gauge 32.

During operation of the vacuum pump 31, the probe 21 may be advanced along the conduit 10. In the present arrangement the probe 21 may be moved towards the second end 12 of the conduit 10, and thus also towards the leak 13. The advancement of the probe 21 along the conduit 10 and towards the second end 12 may be assisted by the pressure difference across the sealing element 22 in that the advancement may involve pulling the probe 21 by a negative pressure created by the vacuum pump 31 between the second end and the sealing element. An advantage with the advancement being assisted by the pressure difference across the sealing element 22 is that advancing the probe 21 and the sealing element past a bend in the conduit 10 may be facilitated.

Optionally, a lubricant may be provided on the sealing element 22 so as to further facilitate its advancement along the conduit 10, while maintaining a good seal against an inner surface of the conduit 10.

During advancement of the probe 21, probe 21 eventually passes the leak 13 in the conduit 10, as illustrated in Fig. 2b. Once the probe 21 has passed the leak 13, the leak 13 is no longer positioned in the evacuated section of the conduit 10 between the sealing element 22 and the second end 12. Thus, once the probe 21 has passed the leak 13, air may be prevented from flowing from outside the conduit 10 through the leak 13 and into the evacuated section of the conduit 10. Consequently, this will result in an increase in the vacuum level, or put differently, this will result in a decrease in the pressure in the evacuated section of the conduit 10, which would be detectable at the pressure gauge 32 of the vacuum pump 31. Alternatively or additionally, the vacuum pump 31 may start to work harder as less air is now present in the conduit 10, and such a change in operation of the vacuum pump 31 may produce an audible change in sound from the vacuum pump 31 and may be detectible by a user such as a service technician.

If the probe 21 is moved in the opposite direction in the conduit 10, for example by pulling the probe connection 23, the sealing element may pass the leak 13 again, such that the leak 13 is once again located in the evacuated section of the conduit 10 between the sealing element 22 and the second end 12. Once again air will be drawn through the leak 13 and into the evacuated section of the conduit 10 as a result of the negative pressure in the conduit 10. The pressure in the evacuated section of the conduit 10 may thus increase once again, which pressure increase may be indicated by the pressure gauge 32.

By moving the probe 21 back and forth across the leak 13 along the conduit 10, preferably with smaller and smaller movements, it is possible to home in on the position of the leak 13. Back and forth movement of the probe 21 may for example be provided by alternatingly pushing and pulling the probe connector 23.

Once the position of the leak 13 along the conduit 10 has been determined, the vacuum pump 31 may, but need not, be deactivated, and/or the probe 21 may be locked into its current position.

The probe detector 25 is then scanned across the surface while paying attention to its indication of the strength of the electromagnetic radiation until a position corresponding to a maximum strength has been determined. This position corresponds to the position of the probe 21 inside the conduit 10, and thus to the position of the leak 13.

At this point, the position of the leak may be indicated on the surface 1, such that actions can be taken to repair it.

In the above the inventive concept has mainly been described with reference to a limited number of examples. However, as is readily appreciated by a person skilled in the art, other examples than the ones disclosed above are equally possible within the scope of the inventive concept, as defined by the appended claims.

For example, despite the above example being focused on a method wherein the probe is inserted into a first end of the conduit and the vacuum pump being connected to an opposite second end, it is conceivable that the probe may be inserted into the same end as to which the vacuum pump is connected. In such a variation the vacuum connection may comprise a probe port, through which the probe and the probe connection may be inserted, and wherein the probe port further comprises a seal for sealing the gap between the probe port and the probe connection, thereby forming a sealable probe port so as to allow the probe connection to slidably move through the probe port.

It is further conceivable that applying a pressure difference in the conduit across the sealing element may involve increasing the pressure in a section of the conduit. Given as a non-limiting example, instead of a vacuum pump, a compressor may be connected to an end of the conduit so as to create an overpressure in a section of the conduit between the sealing element and the conduit end to which the compressor is connected.

A combination of the two above mentioned variations of the inventive concept is also conceivable, such that a compressor is connected to the same end as to which the probe is inserted. The compressor may cause an overpressure in the section of the conduit between the end and the sealing element. Initially, the leak would not be in this section and as no leak occurs, a constant overpressure may be provided by the compressor, which is indicated by the pressure gauge. Optionally, the over pressure may also be utilized to push on the sealing element such that the probe is successively advanced along the conduit. As the sealing section passes the leak, air inside the section of the conduit between the end and the sealing element may now leak out from the conduit, such that the same constant overpressure may no longer be maintained and the pressure in the conduit may decrease. The pressure decrease may be indicated by the pressure gauge.

## Claims

1. A method for detecting a position of a leak in a conduit being installed inside a surface, the method comprising:
inserting a probe into an end of the conduit, the probe having a sealing element configured to seal against an inner surface of the conduit, and wherein proximity of the probe is wirelessly detectable;
applying a pressure difference in the conduit across the sealing element;
advancing the probe along the conduit such that the sealing element passes the leak;
detecting a change in pressure in the conduit when the sealing element passes the position of the leak;
determining the position of the probe by scanning a probe detector external to, and across the surface, the probe detector being configured to wirelessly detect proximity of the probe.

2. The method according to claim 1, wherein the applying a pressure difference comprises:
connecting a vacuum pump to the conduit;
removing, by the vacuum pump, air inside the conduit on one side of the sealing element.

3. The method according to claim 2, wherein the probe is inserted into a first end of the conduit and the vacuum pump is connected to a second end of the conduit.

4. The method according to any one of claims 1-3, wherein the sealing element has a constant outer diameter adapted to fit to an inner diameter of the conduit.

5. The method according to any one of claims 1-3, wherein the sealing element has a variable outer diameter.

6. The method according to claim 3, wherein the advancing the probe along the conduit comprises pulling the probe by a negative pressure created by the vacuum pump between the second end and the sealing element.

7. The method according to any of the preceding claims, wherein the change in pressure in the conduit is a decrease in pressure in the conduit when the sealing element passes the position of the leak.

8. The method according to any of the preceding claims, further comprising:
determining an inner diameter of the conduit;
selecting a sealing element having an outer diameter matching the inner diameter of the conduit, thereby allowing the selected sealing element to slidingly seal against an inner surface of the conduit; and
attaching the selected sealing element to the probe.

9. A kit of parts for detecting a position of a leak in a conduit being installed inside a surface, the kit of parts comprising:
a probe insertable into the conduit, wherein proximity of the probe is wirelessly detectable,
a sealing element, which is attachable to the probe and configured to seal against an inner surface of the conduit, and
a probe detector configured to wirelessly detect proximity of the probe.

10. The kit of parts according to claim 9, further comprising:
a vacuum pump connectable to the conduit and configured to remove air inside the conduit.

11. The kit of parts according to claim 9 or 10, wherein the sealing element has a constant outer diameter adapted to fit to an inner diameter of the conduit.

12. The kit of parts according to claim 9 or 10, wherein the sealing element has a variable outer diameter.

13. The kit of parts according to claim 12, wherein the sealing element is inflatable.

14. The kit of parts according to any one of claims 9 to 13, wherein the probe is attachable to a wire.

15. The kit of parts according to any one of claims 9 to 14, wherein the sealing element is releasably connectable to the probe.
